# EUROPEAN PATENT APPLICATION

(11) **EP 4 818 840 A1**
(43) Date of publication of application: **07.10.2026**
(21) Application number: 24896521.2
(22) Date of filing: 26.11.2024
(51) Int. Cl.: G05D 1/43, G05D 1/622

(54) **OBSTACLE AVOIDANCE METHOD AND APPARATUS FOR ROBOT, AND DEVICE AND READABLE STORAGE MEDIUM**

(30) Priority: 01.12.2023 CN 202311629884
(71) Applicant: Beijing Geekplus Technology Co. Ltd, Beijing 100102 (CN)
(72) Inventor: ZHU, Yulei, Beijing 100102 (CN); LI, Zewei, Beijing 100102 (CN); LI, Yanan, Beijing 100102 (CN)
(74) Representative: De Sandre, Emanuele
(86) International application number: PCT/CN2024/134504
(87) International publication number: WO 2025/113433

(57) **Abstract**

An obstacle avoidance method and apparatus for a robot, and a device and a readable storage medium. The obstacle avoidance method for a robot comprises: firstly, on the basis of current location information of a robot, determining a global obstacle avoidance region and a local obstacle avoidance region (S201); then, acquiring a global obstacle point detection result of the global obstacle avoidance region and a local obstacle point detection result of the local obstacle avoidance region (S202), so as to determine candidate obstacle avoidance points on the basis of the global obstacle point detection result and the local obstacle point detection result (S203), wherein the candidate obstacle avoidance points comprise global obstacle avoidance points and/or local obstacle avoidance points; and finally, on the basis of the candidate obstacle avoidance points, determining a target obstacle avoidance point (S204), and on the basis of the target obstacle avoidance point and the current location information of the robot, determining whether to perform obstacle avoidance processing (S205).

## Description

### CROSS-REFERENCE TO RELATED APPLICATION

The present disclosure claims priority to Chinese Patent Application No. 202311629884.2 filed on December 1, 2023, the entire content of which is incorporated by reference into the present application.

### FIELD

The present disclosure relates to the field of intelligent warehousing, and in particular, to a method and apparatus for obstacle avoidance of a robot, a device, and a readable storage medium.

### BACKGROUND

During a process in which a robot transports a shelf or a target cargo, the robot determines whether an obstacle point exists in an obstacle avoidance region in front of the robot. When an obstacle point appears in the obstacle avoidance region in front of the robot, the robot performs obstacle avoidance deceleration based on a distance between current location information and the obstacle point, to ensure robot safety.

### SUMMARY

Embodiments of the present disclosure provide a method and apparatus for obstacle avoidance of a robot, a device, and a readable storage medium.

According to a first aspect of embodiments of the present disclosure, a method for obstacle avoidance of a robot is provided. The method includes: first, determining a global obstacle avoidance region and a local obstacle avoidance region based on current location information of the robot; in which the global obstacle avoidance region is an obstacle avoidance region in front of the robot in a case where a body attitude of the robot is not deviated, and the local obstacle avoidance region is an obstacle avoidance region in front of the robot in a case where the body attitude of the robot is deviated; then, obtaining a global obstacle point detection result within the global obstacle avoidance region and a local obstacle point detection result within the local obstacle avoidance region; then, determining a candidate obstacle avoidance point according to the global obstacle point detection result and the local obstacle point detection result, in which the candidate obstacle avoidance point includes a global obstacle avoidance point and/or a local obstacle avoidance point, the global obstacle avoidance point is an obstacle point on a travel path located within the global obstacle avoidance region, and the local obstacle avoidance point is an obstacle point on the travel path located within the local obstacle avoidance region; finally, determining a target obstacle avoidance point based on whether the candidate obstacle avoidance point includes the local obstacle avoidance point and/or the global obstacle avoidance point, and determining whether to perform obstacle avoidance processing based on the target obstacle avoidance point and the current location information of the robot.

In an optional embodiment, determining the global obstacle avoidance region and the local obstacle avoidance region based on the current location information of the robot includes: determining the global obstacle avoidance region based on current location information of the robot in a global coordinate system and a preset obstacle avoidance region size; and determining the local obstacle avoidance region based on current location information of the robot in a local coordinate system and the preset obstacle avoidance region size.

In an optional embodiment, obtaining the global obstacle point detection result within the global obstacle avoidance region and the local obstacle point detection result within the local obstacle avoidance region includes: obtaining location information of at least one obstacle point; determining the global obstacle point detection result based on the location information of the at least one obstacle point and the global obstacle avoidance region, in which the global obstacle point detection result indicates whether the at least one obstacle point exists within the global obstacle avoidance region; and determining the local obstacle point detection result based on the location information of the at least one obstacle point and the local obstacle avoidance region, in which the local obstacle point detection result indicates whether the at least one obstacle point exists within the local obstacle avoidance region.

In an optional embodiment, determining the candidate obstacle avoidance point according to the global obstacle point detection result and the local obstacle point detection result includes: in a case where the global obstacle point detection result indicates that at least one first obstacle point exists in the global obstacle avoidance region, determining the global obstacle avoidance point among the at least one first obstacle point based on the current location information of the robot; and/or in a case where the local obstacle point detection result indicates that at least one second obstacle point exists in the local obstacle avoidance region, determining the local obstacle avoidance point among the at least one second obstacle point based on the current location information of the robot.

In an optional embodiment, determining the global obstacle avoidance point among the at least one first obstacle point based on the current location information of the robot includes: determining, based on the current location information of the robot, a distance between each first obstacle point and the robot; and determining the first obstacle point closest to the robot as the global obstacle avoidance point.

In an optional embodiment, determining the local obstacle avoidance point among the at least one second obstacle point based on the current location information of the robot includes: determining, based on the current location information of the robot, a distance between each second obstacle point and the robot; and determining the second obstacle point closest to the robot as the local obstacle avoidance point.

In an optional embodiment, determining the target obstacle avoidance point based on the candidate obstacle avoidance point includes: in a case where the candidate obstacle avoidance point does not include the local obstacle avoidance point and the candidate obstacle avoidance point includes the global obstacle avoidance point, determining a projection point of the global obstacle avoidance point projected along a first direction into the local obstacle avoidance region as the target obstacle avoidance point.

In an optional embodiment, determining the target obstacle avoidance point based on the candidate obstacle avoidance point includes: in a case where the candidate obstacle avoidance point includes the local obstacle avoidance point and the candidate obstacle avoidance point includes the global obstacle avoidance point, in a case where the current location information of the robot and/or the local obstacle avoidance point satisfies a preset condition, determining the local obstacle avoidance point as the target obstacle avoidance point; and in a case where the current location information of the robot and/or the local obstacle avoidance point does not satisfy the preset condition, determining a first positional relationship of the local obstacle avoidance point with respect to the global obstacle avoidance region, and determining the target obstacle avoidance point based on the first positional relationship and the current location information of the robot; or in a case where the current location information of the robot and/or the local obstacle avoidance point does not satisfy the preset condition, determining a second positional relationship of the global obstacle avoidance point with respect to the local obstacle avoidance region, and determining the target obstacle avoidance point based on the second positional relationship.

In an optional embodiment, the current location information of the robot and/or the local obstacle avoidance point satisfying the preset condition includes at least one of: an angle difference between a travel angle of the robot and a target angle being greater than a preset angle difference; a lateral distance between a current travel path of the robot and a preset travel path being greater than a preset lateral distance; or a distance between the local obstacle avoidance point and the robot being less than or equal to a braking distance of the robot.

In an optional embodiment, determining the target obstacle avoidance point based on the first positional relationship includes: in a case where the first positional relationship indicates that the local obstacle avoidance point is located outside the global obstacle avoidance region, determining a projection point of the global obstacle avoidance point projected along the first direction into the local obstacle avoidance region as the target obstacle avoidance point.

In an optional embodiment, determining the target obstacle avoidance point based on the first positional relationship includes: in a case where the first positional relationship indicates that the local obstacle avoidance point is located inside the global obstacle avoidance region, determining a projection point of the global obstacle avoidance point projected along the first direction into the local obstacle avoidance region; and determining the target obstacle avoidance point based on the projection point, the local obstacle avoidance point, and the current location information of the robot.

In an optional embodiment, determining the target obstacle avoidance point based on the projection point, the local obstacle avoidance point, and the current location information of the robot includes: determining a first distance between the projection point and the robot; determining a second distance between the local obstacle avoidance point and the robot; in a case where the first distance is smaller than the second distance, determining the projection point as the target obstacle avoidance point; and in a case where the first distance is greater than the second distance, determining the local obstacle avoidance point as the target obstacle avoidance point.

In an optional embodiment, determining the target obstacle avoidance point based on the second positional relationship includes: in a case where the second positional relationship indicates that the global obstacle avoidance point is located inside the local obstacle avoidance region, determining a distance between the global obstacle avoidance point and the robot and a distance between the local obstacle avoidance point and the robot; and determining an obstacle point closest to the robot among the global obstacle avoidance point and the local obstacle avoidance point as the target obstacle avoidance point.

In an optional embodiment, determining whether to perform the obstacle avoidance processing based on the target obstacle avoidance point and the current location information of the robot includes: in a case where a distance between the target obstacle avoidance point and the robot is less than or equal to a braking distance of the robot, performing the obstacle avoidance processing; and in a case where the distance between the target obstacle avoidance point and the robot is greater than the braking distance of the robot, not performing the obstacle avoidance processing.

In an optional embodiment, determining the target obstacle avoidance point based on the candidate obstacle avoidance point includes: in a case where the candidate obstacle avoidance point includes the local obstacle avoidance point and the candidate obstacle avoidance point does not include the global obstacle avoidance point, determining the target obstacle avoidance point based on the local obstacle avoidance point and the current location of the robot.

In an optional embodiment, determining the target obstacle avoidance point based on the local obstacle avoidance point and the current location of the robot includes: in a case where a distance between the local obstacle avoidance point and the robot is less than or equal to the braking distance of the robot, determining the local obstacle avoidance point as the target obstacle avoidance point; and in a case where the distance between the local obstacle avoidance point and the robot is greater than the braking distance of the robot, determining a preset obstacle avoidance point as the target obstacle avoidance point, in which a distance between the preset obstacle avoidance point and the robot is always greater than the braking distance of the robot.

In an optional embodiment, determining the target obstacle avoidance point based on the candidate obstacle avoidance point includes: in a case where the candidate obstacle avoidance point does not include the local obstacle avoidance point and the global obstacle avoidance point, determining the preset obstacle avoidance point as the target obstacle avoidance point.

In an optional embodiment, determining the global obstacle point detection result based on the location information of the at least one obstacle point and the global obstacle avoidance region includes: determining location information of the at least one obstacle point in a global coordinate system based on the location information of the at least one obstacle point in a local coordinate system, the current location information of the robot in the local coordinate system, and a position attitude angle of the robot; and determining the global obstacle point detection result based on the location information of the at least one obstacle point in the global coordinate system and the global obstacle avoidance region.

In an optional embodiment, determining the local obstacle point detection result based on the location information of the at least one obstacle point and the local obstacle avoidance region includes: determining the local obstacle point detection result based on the location information of the at least one obstacle point in the local coordinate system and the local obstacle avoidance region.

According to a second aspect of embodiments of the present disclosure, an apparatus for obstacle avoidance of a robot is provided. The apparatus includes: a processing module configured to determine a global obstacle avoidance region and a local obstacle avoidance region based on current location information of a robot, in which the global obstacle avoidance region is an obstacle avoidance region in front of the robot in a case where a body attitude of the robot is not deviated, and the local obstacle avoidance region is an obstacle avoidance region in front of the robot in a case where the body attitude of the robot is deviated; and an obtaining module configured to obtain a global obstacle point detection result within the global obstacle avoidance region and a local obstacle point detection result within the local obstacle avoidance region. The processing module is further configured to determine a candidate obstacle avoidance point according to the global obstacle point detection result and the local obstacle point detection result, the candidate obstacle avoidance point including a global obstacle avoidance point and/or a local obstacle avoidance point; determine a target obstacle avoidance point based on whether the candidate obstacle avoidance point includes the local obstacle avoidance point and/or the global obstacle avoidance point; and determine whether to perform obstacle avoidance processing based on the target obstacle avoidance point and the current location information of the robot, in which the global obstacle avoidance point is an obstacle point on a travel path located within the global obstacle avoidance region, and the local obstacle avoidance point is an obstacle point on the travel path located within the local obstacle avoidance region.

According to a third aspect of embodiments of the present disclosure, an electronic device is provided, including a memory and a processor, the memory storing a computer program, in which the processor executes the computer program to implement the method according to any one of the implementations of the first aspect.

According to a fourth aspect of embodiments of the present disclosure, a computer-readable storage medium is provided, the computer-readable storage medium storing a computer program that, when executed by a processor, implements the method according to any one of the implementations of the first aspect.

### BRIEF DESCRIPTION OF THE DRAWINGS

To describe the technical solutions in embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without creative efforts.
FIG. 1 is a schematic diagram of an application scenario of a method for obstacle avoidance of a robot according to an embodiment of the present disclosure.
FIG. 2 is a schematic flowchart of a method for obstacle avoidance of a robot according to an embodiment of the present disclosure.
FIG. 3 is a schematic diagram showing positions of a global obstacle avoidance region and a local obstacle avoidance region in a method for obstacle avoidance of a robot according to an embodiment of the present disclosure.
FIG. 4A is a schematic diagram of a local coordinate system and a global coordinate system in a method for obstacle avoidance of a robot according to an embodiment of the present disclosure.
FIG. 4B is a schematic diagram of an obstacle avoidance region in a method for obstacle avoidance of a robot according to an embodiment of the present disclosure.
FIG. 5 is a schematic flowchart of another method for obstacle avoidance for a robot according to an embodiment of the present disclosure.
FIG. 6 is a schematic flowchart of yet another method for obstacle avoidance for a robot according to an embodiment of the present disclosure.
FIG. 7 is a schematic flowchart of yet another method for obstacle avoidance for a robot according to an embodiment of the present disclosure.
FIG. 8 is a schematic flowchart of yet another method for obstacle avoidance for a robot according to an embodiment of the present disclosure.
FIG. 9 is a schematic diagram of positions of candidate obstacle avoidance points according to an embodiment of the present disclosure.
FIG. 10 is a schematic diagram of positions of candidate obstacle avoidance points according to another embodiment of the present disclosure.
FIG. 11 is a schematic diagram of positions of candidate obstacle avoidance points according to yet another embodiment of the present disclosure.
FIG. 12 is a schematic diagram of positions of candidate obstacle avoidance points according to yet another embodiment of the present disclosure.
FIG. 13 is a schematic diagram of positions of candidate obstacle avoidance points according to yet another embodiment of the present disclosure.
FIG. 14 is a schematic block diagram of an apparatus for obstacle avoidance of a robot according to an embodiment of the present disclosure.
FIG. 15 is a schematic block diagram of an internal structure of a robot according to an embodiment of the present disclosure.
FIG. 16 is a schematic block diagram of an electronic device according to an embodiment of the present disclosure.

### DETAILED DESCRIPTION

To enable a person skilled in the art to better understand the technical solutions in embodiments of the present disclosure, and to make the above objectives, features, and advantages of embodiments of the present disclosure more apparent and understandable, the technical solutions in embodiments of the present disclosure are described in further detail below with reference to the accompanying drawings.

During a process in which a robot transports a shelf or a target cargo, the robot determines whether an obstacle point exists in an obstacle avoidance region in front of the robot. When an obstacle point appears in the obstacle avoidance region in front of the robot, the robot performs obstacle avoidance deceleration based on a distance between current location information and the obstacle point, to ensure robot safety.

However, during traveling along a travel path, a robot (e.g., a picking robot) may experience a deviation in a body attitude of the robot due to external factors (e.g., control accuracy error, limited radar accuracy).

In some embodiments, when the body attitude of the robot is deviated, an obstacle point outside the travel path may be detected. In a case where the robot performs obstacle avoidance deceleration based on this obstacle point, erroneous obstacle avoidance may occur, affecting the operating efficiency of the robot.

For example, when the body attitude of the robot is deviated, the robot travels while adjusting the body attitude to adjust the body attitude of the robot to a target body attitude (an attitude in which the body attitude of the robot is not deviated). Therefore, during actual operation, the robot may not actually come into contact with a detected obstacle point located outside the travel path. In this case, in a case where obstacle avoidance is performed based on the obstacle point outside the travel path, erroneous obstacle avoidance occurs.

In addition, during traveling of the robot, the robot may fail to detect an obstacle point located at an edge of the obstacle avoidance region in front of the robot, which may cause the robot to collide with the obstacle point at the edge of the obstacle avoidance region during traveling, resulting in low safety of robot operation.

Based on this, the present disclosure provides a method for obstacle avoidance of a robot, so that during traveling, the robot may not only detect an obstacle point within an obstacle avoidance region (a local obstacle avoidance region) in front of the robot when a body attitude of the robot is deviated, but also detect an obstacle point within an obstacle avoidance region (a global obstacle avoidance region) in front of the robot when the body attitude of the robot is normal (not deviated), i.e., combining global obstacle avoidance and local obstacle avoidance. In this way, the obstacle avoidance accuracy of the robot may be improved, erroneous obstacle avoidance of the robot may be reduced, and the operating efficiency and operating smoothness of the robot may be improved. This may also reduce the probability of collision between the robot and an obstacle avoidance point, improving the safety of the robot.

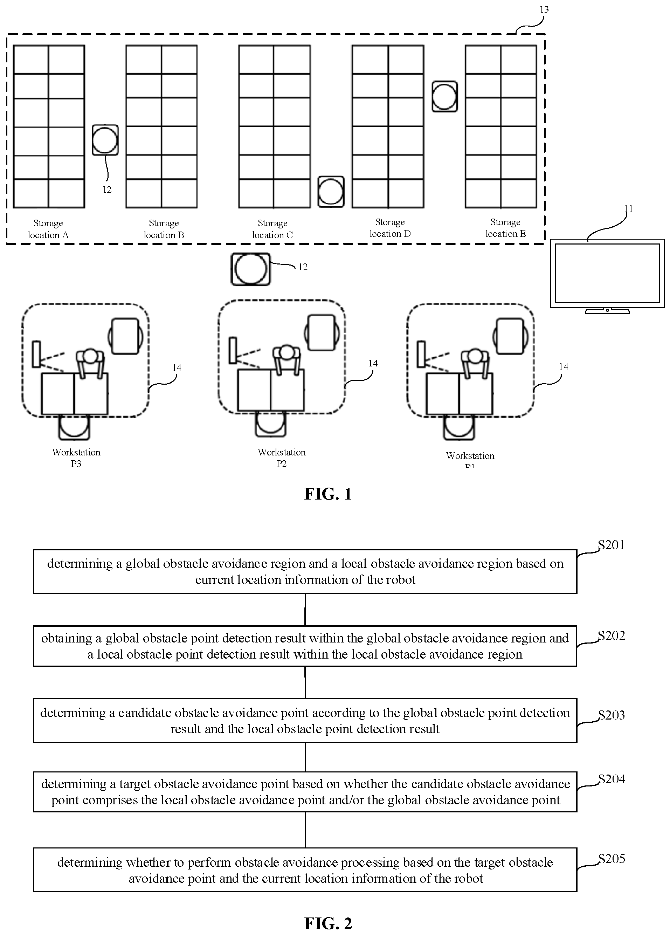

Before describing the technical solutions of embodiments of the present disclosure, the application scenario of embodiments of the present disclosure is first described with reference to the accompanying drawings. As shown in FIG. 1, the application scenario includes a control apparatus 11, a robot 12, a storage area 13, and a workstation 14. A warehouse includes at least one robot 12, a storage area 13, and at least one workstation 14. The storage area 13 is used for storing goods, and the goods are stored in an inventory container (e.g., a case, a movable carrier, a pallet, a tote, or an original case). The control apparatus 11 communicates with the robot 12 via a network.

In some embodiments, the robot may also be referred to as a movable device or a transport device. The robot may be a transport robot, such as an automated guided vehicle (AGV). For example, the transport robot may carry a target object from a current location to a target location. The target object may include a target cargo in an order to be processed, a container containing the target cargo, a bin containing the target cargo, or an original case containing the target cargo, which is not limited in embodiments of the present disclosure. The following embodiments are schematically described by taking the target object as a target cargo as an example.

For example, the control apparatus 11 sends a transport instruction to the robot 12, and the transport instruction includes a travel path.

For example, taking a starting point of a travel path as a storage location A in the storage area 13 where a target cargo is placed and an end point as a workstation P1 as an example, after receiving the transport instruction, the robot 12 moves to the storage location A based on the transport instruction to obtain the target cargo, and transports the target cargo along the travel path to the workstation P1, where a worker or a picking device at the workstation P1 picks the target cargo.

For another example, taking a starting point of a travel path as a workstation P1 and an end point as a storage location A in the storage area 13 as an example, after receiving the transport instruction, the robot 12 moves to the workstation P1 based on the transport instruction to obtain the target cargo, and transports the target cargo along the travel path to the storage location A. During the process of transporting the target cargo along the travel path, the robot detects an obstacle in the obstacle avoidance region at a preset detection frequency or in real time to avoid the obstacle in a timely manner.

In some embodiments, when the robot 12 transports a target cargo, the robot 12 may directly transport the target cargo (e.g., by placing the target cargo on the robot 12 for transportation), may transport an inventory container (e.g., a case, a pallet, a tote, or an original case) storing the target cargo, or may transport a movable carrier (e.g., a shelf) storing the target cargo. Embodiments of the present disclosure do not limit the manner in which the robot transports the target cargo. In different application scenarios of a warehousing system, the manner in which the robot transports the target cargo may differ. In some embodiments, the manner in which the robot transports the target cargo is related to the type of the robot.

In some embodiments, the control apparatus 11 may be deployed on a terminal device or a server. The terminal device may be, but is not limited to, various personal computers, laptops, smart phones, tablet computers, portable wearable devices, and other electronic devices. The server may be implemented as an independent server or a server cluster consisting of a plurality of servers. The following embodiments are schematically described by taking the control apparatus 11 deployed on an electronic device as an example.

FIG. 2 shows a schematic flowchart of a method for obstacle avoidance of a robot according to an embodiment of the present disclosure. As shown in FIG. 2, an embodiment of the present disclosure provides a method for obstacle avoidance of a robot, including S201 to S205.

S201: A global obstacle avoidance region and a local obstacle avoidance region are determined based on current location information of a robot.

The global obstacle avoidance region is an obstacle avoidance region in front of the robot in a case where a body attitude of the robot is not deviated, and the local obstacle avoidance region is an obstacle avoidance region in front of the robot in a case where the body attitude of the robot is deviated.

In some embodiments, the current location information of the robot represents coordinate information of the robot in a warehouse.

For example, the robot may determine the current location information of the robot by identifying a location marker (e.g., a two-dimensional code) provided in the warehouse. The robot may also send identifier information corresponding to the location marker to a control apparatus by identifying the location marker provided in the warehouse, and the control apparatus determines the coordinate information of the robot in the warehouse based on the identifier information sent by the robot. Then, the robot obtains the current location information of the robot from the control apparatus. Embodiments of the present disclosure do not limit the manner of determining the current location information of the robot.

In some embodiments, the control apparatus determines a starting point and an end point of a travel path according to order information, and plans a travel path based on the starting point and the end point of the travel path. Then, the control apparatus generates a transport instruction based on the travel path, and the transport instruction is used to instruct the robot to travel along the travel path. The global obstacle avoidance region refers to an obstacle avoidance region in front of the robot when the robot is in a target body attitude (an attitude in which the body attitude is not deviated) during the process of traveling along the travel path. The local obstacle avoidance region refers to an obstacle avoidance region in front of the robot when the body attitude of the robot is deviated during the process of traveling along the travel path.

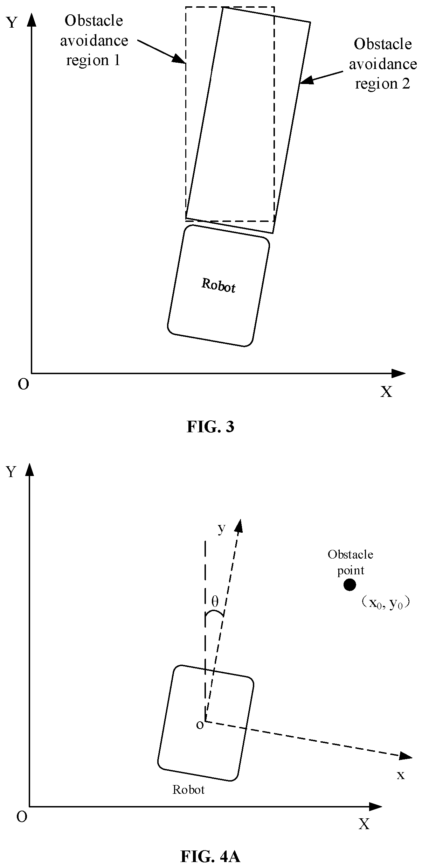

For example, as shown in FIG. 3, when the robot travels along a travel path, in a case where the body attitude of the robot is deviated, the obstacle avoidance region of the robot changes from an obstacle avoidance region 1 (an area framed by a dashed box in FIG. 3) to an obstacle avoidance region 2 (an area framed by a solid box in FIG. 3). The obstacle avoidance region 1 is the global obstacle avoidance region, and the obstacle avoidance region 2 is the local obstacle avoidance region.

In some embodiments, the current location information of the robot includes at least one of current location information of the robot in a local coordinate system or current location information of the robot in a global coordinate system.

It should be noted that the current location information of the robot in the local coordinate system and the current location information of the robot in the global coordinate system are interchangeable. That is, when the current location information of the robot in the local coordinate system is known, coordinate system conversion may be performed on the current location information of the robot in the local coordinate system based on the global coordinate system and the local coordinate system to obtain the current location information of the robot in the global coordinate system. When the current location information of the robot in the global coordinate system is known, coordinate system conversion may be performed on the current location information of the robot in the global coordinate system based on the global coordinate system and the local coordinate system to obtain the current location information of the robot in the local coordinate system.

In some embodiments, the global obstacle avoidance region is determined based on the current location information of the robot in the global coordinate system and a preset obstacle avoidance region size.

For example, FIG. 4A shows a local coordinate system and a global coordinate system. As shown in FIG. 4A, the global coordinate system may be a coordinate system X-O-Y constructed with any point in a historical area that the robot traveled along the travel path as an origin (point O in FIG. 4A), a length direction of the travel path of the robot as a Y axis, and a direction perpendicular to the Y axis as an X axis.

In some embodiments, the preset obstacle avoidance region size is a preset value, and the preset obstacle avoidance region size may be stored in a storage module of the robot or may be stored in the control apparatus. That is, the robot may obtain the preset obstacle avoidance region size from the storage module of the robot, or may request to obtain the preset obstacle avoidance region size from the control apparatus. Embodiments of the present disclosure do not limit this.

It should be noted that the robot includes a plurality of models, and the specifications, functions, and obstacle avoidance region sizes of different models of robots may be the same or different. Embodiments of the present disclosure do not limit this.

In addition, the shape of the obstacle avoidance region of the robot may be rectangular or circular. Embodiments of the present disclosure do not limit the shape of the obstacle avoidance region of the robot. In the following embodiments, the obstacle avoidance region of the robot is schematically described as a rectangular region provided in front of the robot.

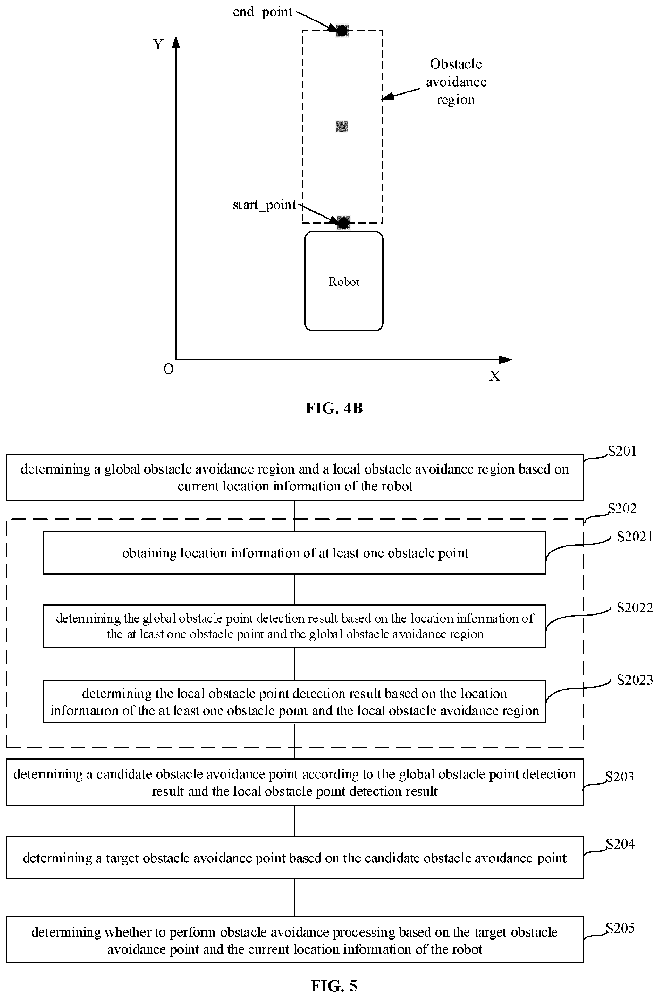

For example, FIG. 4B shows an obstacle avoidance region. As shown in FIG. 4B, the length of the obstacle avoidance region may be a travel path length (obs_length), i.e., a distance between a start point (start_point) and an end point (end_point). The width of the obstacle avoidance region may be a robot width (obs_width).

In some embodiments, a left boundary x_left, a right boundary x_right, an upper boundary y_up, and a lower boundary y_down of the global obstacle avoidance region may be calculated according to the following formulas 1 to 4, respectively:
$x_left = X - obs_width / 2$ (Formula 1)
$x_right = X + obs_width / 2$ (Formula 2)
$y_up = Y + robot_length / 2 + obs_length$ (Formula 3)
$y_down = Y + robot_length / 2$ (Formula 4)

Where robot_length is a length of the robot, and (X, Y) is a coordinate of the robot in the global coordinate system.

In some embodiments, the local obstacle avoidance region is determined based on the current location information of the robot in the local coordinate system and the preset obstacle avoidance region size.

For example, as shown in FIG. 4A, the local coordinate system may be a coordinate system x-o-y constructed with the robot (current location information of the robot) as an origin (point o in FIG. 4A), a direction in which the robot faces when the body attitude of the robot is deviated (i.e., a current actual traveling direction of the robot) as a y axis, and a direction perpendicular to the y axis as an x axis.

In some embodiments, the current location information of the robot in the global coordinate system in Formulas 1 to 4 is replaced with the current location information of the robot in the local coordinate system, i.e., the coordinate (X, Y) of the robot in the global coordinate system in Formulas 1 to 4 is replaced with a coordinate (x, y) of the robot in the local coordinate system, to determine the local obstacle avoidance region based on the current location information of the robot in the local coordinate system and the preset obstacle avoidance region size.

It should be noted that since the global obstacle avoidance region is an obstacle avoidance region corresponding to a case where the body attitude of the robot is not deviated, and the local obstacle avoidance region is an obstacle avoidance region corresponding to a case where the body attitude of the robot is deviated, in a case where the body attitude of the robot is deviated by 0 degrees, an included angle between a left boundary (right boundary) of the global obstacle avoidance region and a left boundary (right boundary) of the local obstacle avoidance region is an angle of 0 degrees.

In some embodiments, the local coordinate system and the global coordinate system may be constructed by the robot based on the current location information of the robot and the travel path, or may be constructed by the control apparatus based on the current location information of the robot and the travel path and then sent to the robot. Embodiments of the present disclosure do not limit this.

S202: A global obstacle point detection result within the global obstacle avoidance region and a local obstacle point detection result within the local obstacle avoidance region are obtained.

In some embodiments, the global obstacle avoidance point is an obstacle point on a travel path located within the global obstacle avoidance region, and the local obstacle avoidance point is an obstacle point on the travel path located within the local obstacle avoidance region.

For example, based on the global obstacle avoidance region and the local obstacle avoidance region determined in S201, the robot determines the global obstacle point detection result by determining whether an obstacle point exists in the global obstacle avoidance region, and determines the local obstacle point detection result by determining whether an obstacle point exists in the local obstacle avoidance region.

In some embodiments, an obstacle point may be a stationary object (e.g., a cargo, an inventory container, etc.) or a movable object (e.g., another robot paused on the travel path). Embodiments of the present disclosure do not limit this.

As shown in FIG. 5, in some embodiments, S202 may include S2021 to S2023.

S2021: Location information of at least one obstacle point is obtained.

For example, the robot may detect an obstacle point on the travel path via a built-in laser radar to obtain a coordinate of the at least one obstacle point in the local coordinate system, obtaining the location information of the at least one obstacle point.

During the process of detecting an obstacle point on the travel path via the built-in laser radar, since a laser radar signal emitted by the built-in laser radar propagates along the current actual traveling direction of the robot, i.e., along the y axis of the local coordinate system, the location information of the at least one obstacle point obtained by the robot is all location information of the at least one obstacle point in the local coordinate system.

S2022: The global obstacle point detection result is determined based on the location information of the at least one obstacle point and the global obstacle avoidance region.

The global obstacle point detection result indicates whether an obstacle point exists within the global obstacle avoidance region.

For example, after detecting an obstacle point on the travel path via the built-in laser radar to obtain the coordinate of the at least one obstacle point in the local coordinate system, the robot obtains a corresponding obstacle point cloud based on the coordinate of the at least one obstacle point in the local coordinate system. Then, by determining whether there is an overlapping area between the obstacle point cloud and the global obstacle avoidance region, the robot determines whether an obstacle point exists in the global obstacle avoidance region, obtaining the global obstacle point detection result.

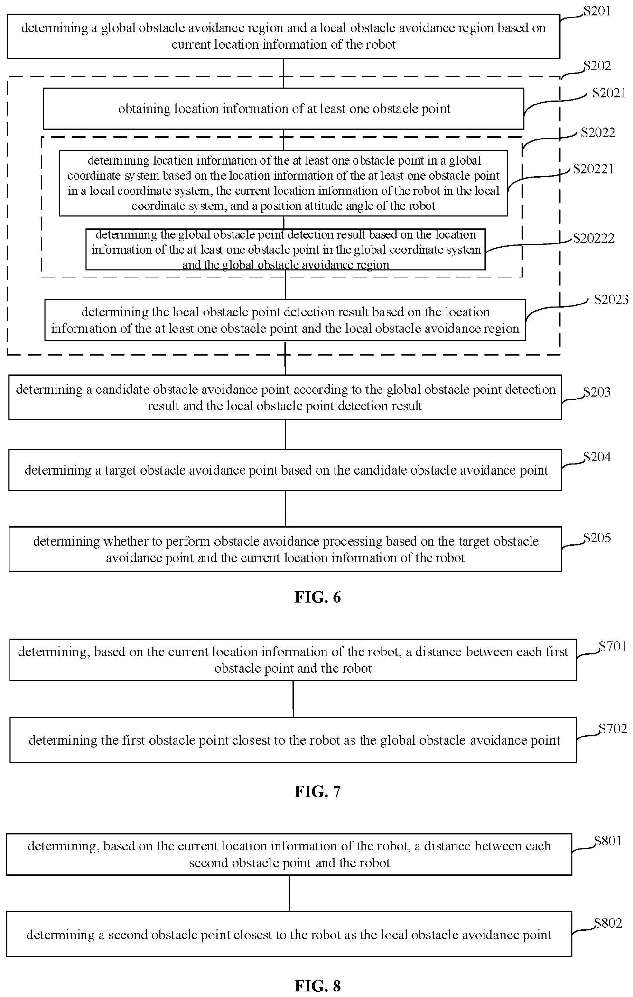

To improve the accuracy of the global obstacle point detection result, as shown in FIG. 6, in some embodiments, S2022 may include S20221-S20222.

S20221: Location information of the at least one obstacle point in a global coordinate system is determined based on the location information of the at least one obstacle point in the local coordinate system, the current location information of the robot in the local coordinate system, and a position attitude angle of the robot.

In some embodiments, the location information of the obstacle point in the local coordinate system is a coordinate of the obstacle point in the local coordinate system. The position attitude angle of the robot is an angle corresponding to a case where the body attitude of the robot is deviated.

For example, based on FIG. 4A, in a case where the body attitude of the robot is deviated by θ degrees, i.e., the position attitude angle of the robot is θ degrees, the location information of the obstacle point in the global coordinate system may be determined according to Formulas 5 and 6, which are as follows:
${X}_{0} = {x}_{0} * cosθ - {y}_{0} * sinθ + a$ (Formula 5)
${Y}_{0} = {x}_{0} * sinθ + {y}_{0} * cosθ + b$ (Formula 6)

Where (a, b) is a coordinate of the robot in the global coordinate system, θ is the position attitude angle of the robot, (x₀, y₀) is a coordinate of the obstacle point in the local coordinate system, i.e., the location information of the obstacle point in the local coordinate system, and (X₀, Y₀) is a coordinate of the obstacle point in the global coordinate system, i.e., the location information of the obstacle point in the global coordinate system.

S20222: The global obstacle point detection result is determined based on the location information of the at least one obstacle point in the global coordinate system and the global obstacle avoidance region.

For example, if it is determined based on the location information of the obstacle point in the global coordinate system (the coordinate of the obstacle point in the global coordinate system) that the obstacle point is within the global obstacle avoidance region, then the global obstacle point detection result indicates that an obstacle point exists within the global obstacle avoidance region; if it is determined based on the location information of the obstacle point in the global coordinate system that the obstacle point is not within the global obstacle avoidance region, then the global obstacle point detection result indicates that no obstacle point exists within the global obstacle avoidance region.

S2023: The local obstacle point detection result is determined based on the location information of the at least one obstacle point and the local obstacle avoidance region.

The local obstacle point detection result indicates whether an obstacle point exists within the local obstacle avoidance region.

In some embodiments, S2023 may include: determining the local obstacle point detection result based on the location information of the obstacle point in the local coordinate system and the local obstacle avoidance region.

For example, if it is determined based on the location information of the obstacle point in the local coordinate system (the coordinate of the obstacle point in the local coordinate system) that the obstacle point is within the local obstacle avoidance region, then the local obstacle point detection result indicates that an obstacle point exists within the local obstacle avoidance region; if it is determined based on the location information of the obstacle point in the local coordinate system that the obstacle point is not within the local obstacle avoidance region, then the local obstacle point detection result indicates that no obstacle point exists within the local obstacle avoidance region.

It should be noted that S2022 may be executed first to determine the global obstacle point detection result, and then S2023 may be executed to determine the local obstacle point detection result; alternatively, S2023 may be executed first to determine the local obstacle point detection result, and then S2022 may be executed to determine the global obstacle point detection result. The embodiments of the present disclosure do not limit the execution order of S2022-S2023.

S203: A candidate obstacle avoidance point is determined according to the global obstacle point detection result and the local obstacle point detection result.

The candidate obstacle avoidance point includes a global obstacle avoidance point and/or a local obstacle avoidance point. The global obstacle avoidance point is an obstacle point on the travel path located within the global obstacle avoidance region, and the local obstacle avoidance point is an obstacle point on the travel path located within the local obstacle avoidance region.

In some embodiments, when the global obstacle point detection result indicates that at least one first obstacle point exists in the global obstacle avoidance region, the global obstacle avoidance point is determined among the at least one first obstacle point based on the current location information of the robot; and/or, when the local obstacle point detection result indicates that at least one second obstacle point exists in the local obstacle avoidance region, the local obstacle avoidance point is determined among the at least one second obstacle point based on the current location information of the robot.

It should be noted that the first obstacle point is an obstacle point located within the global obstacle avoidance region among the plurality of obstacle points on the travel path detected by the robot, and the second obstacle point is an obstacle point located within the local obstacle avoidance region among the plurality of obstacle points on the travel path detected by the robot.

As shown in FIG. 7, in some embodiments, determining the global obstacle avoidance point among the at least one first obstacle point based on the current location information of the robot includes S701-S702.

S701: A distance between each first obstacle point and the robot is determined based on the current location information of the robot.

For example, the distance between each first obstacle point and the robot is determined based on the coordinate of the robot in the global coordinate system and the coordinate of each first obstacle point in the global coordinate system; or the distance between each first obstacle point and the robot is determined based on the coordinate of the robot in the local coordinate system and the coordinate of each first obstacle point in the local coordinate system.

S702: The first obstacle point closest to the robot is determined as the global obstacle avoidance point.

In some embodiments, the number of first obstacle points may be one or multiple. When the number of first obstacle points is one, the one first obstacle point is determined as the global obstacle avoidance point; when the number of first obstacle points is multiple, the first obstacle point closest to the robot among the multiple first obstacle points is determined as the global obstacle avoidance point.

As shown in FIG. 8, in some embodiments, determining the global obstacle avoidance point among the at least one second obstacle point based on the current location information of the robot includes S801-S802.

S801: A distance between each second obstacle point and the robot is determined based on the current location information of the robot.

For example, the distance between each second obstacle point and the robot is determined based on the coordinate of the robot in the global coordinate system and the coordinate of each second obstacle point in the global coordinate system; or the distance between each second obstacle point and the robot is determined based on the coordinate of the robot in the local coordinate system and the coordinate of each second obstacle point in the local coordinate system.

S802: The second obstacle point closest to the robot is determined as the local obstacle avoidance point.

In some embodiments, the number of second obstacle points may be one or multiple. When the number of second obstacle points is one, the one second obstacle point is determined as the local obstacle avoidance point; when the number of second obstacle points is multiple, the second obstacle point closest to the robot among the multiple second obstacle points is determined as the local obstacle avoidance point.

S204: A target obstacle avoidance point is determined based on whether the candidate obstacle avoidance point includes the local obstacle avoidance point and/or the global obstacle avoidance point.

For example, the target obstacle avoidance point indicates whether the robot performs obstacle avoidance processing.

In some embodiments, in a case where the candidate obstacle avoidance point does not include the local obstacle avoidance point and the candidate obstacle avoidance point includes the global obstacle avoidance point, a projection point of the global obstacle avoidance point projected along a first direction into the local obstacle avoidance region is determined as the target obstacle avoidance point.

In some embodiments, the first direction refers to the direction in which the global obstacle avoidance point is projected from the global obstacle avoidance region to the local obstacle avoidance region. The first direction may be the X-axis direction of the global coordinate system or the x-axis direction of the local coordinate system, which is not limited in embodiments of the present disclosure. In the following embodiments, the first direction being the X-axis direction of the global coordinate system is taken as an example for illustrative description.

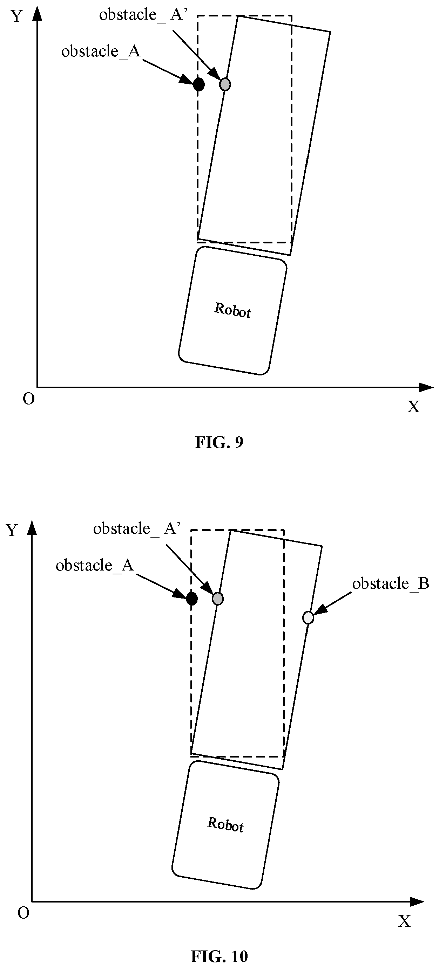

For example, as shown in FIG. 9, when the candidate obstacle avoidance point does not include the local obstacle avoidance point and the candidate obstacle avoidance point includes the global obstacle avoidance point, it means that there is no local obstacle avoidance point in the local obstacle avoidance region, but there is a global obstacle avoidance point in the global obstacle avoidance region. That is, there is a global obstacle avoidance point obstacle_A in the global obstacle avoidance region (the area framed by the dashed box in FIG. 9), but the global obstacle avoidance point obstacle_A is not in the local obstacle avoidance region (the area framed by the solid box in FIG. 9). At this time, the global obstacle avoidance point obstacle_A is projected along the X-axis direction of the global coordinate system onto the left boundary of the local obstacle avoidance region of the robot to obtain the projection point obstacle_A', and the projection point obstacle_A' is determined as the target obstacle avoidance point.

It may be understood that, in the case where the candidate obstacle avoidance point does not include the local obstacle avoidance point and the candidate obstacle avoidance point includes the global obstacle avoidance point, the robot uses the projection point of the global obstacle avoidance point projected along the first direction into the local obstacle avoidance region as the target obstacle avoidance point. This may prevent the robot from being unable to brake in time due to the short distance between the robot and the global obstacle avoidance point when the robot adjusts its body attitude to the target body attitude, preventing the robot from colliding with the global obstacle avoidance point. Since during the process of the robot adjusting its body attitude, the projection point of the global obstacle avoidance point projected along the first direction into the local obstacle avoidance region is closer to the robot than the global obstacle avoidance point itself, by using the projection point as the target obstacle avoidance point, the robot may avoid obstacles in a timely manner during the process of adjusting its body attitude, improving the safety of the robot during operation.

In some embodiments, the global obstacle avoidance point may be projected along the first direction onto any boundary (e.g., left boundary, right boundary) of the local obstacle avoidance region, or onto any part within the local obstacle avoidance region. Embodiments of the present disclosure do not limit this.

To further improve the safety and obstacle avoidance accuracy of the robot, and to improve the operating efficiency and smoothness of the robot, in some embodiments, in a case where the candidate obstacle avoidance point includes the local obstacle avoidance point and the candidate obstacle avoidance point includes the global obstacle avoidance point, if the current location information of the robot and/or the local obstacle avoidance point satisfies a preset condition, the local obstacle avoidance point is determined as the target obstacle avoidance point.

For example, in a case where the candidate obstacle avoidance point includes the local obstacle avoidance point and the candidate obstacle avoidance point includes the global obstacle avoidance point, it means that there is a local obstacle avoidance point in the local obstacle avoidance region and a global obstacle avoidance point in the global obstacle avoidance region. At this time, the robot may determine whether to perform global obstacle avoidance or local obstacle avoidance based on whether the current location information of the robot and/or the local obstacle avoidance point satisfies the preset condition.

In some embodiments, the current location information of the robot and/or the local obstacle avoidance point satisfying the preset condition includes at least one of: an angle difference between the travel angle of the robot and a target angle being greater than a preset angle difference; a lateral distance between the current travel path of the robot and a preset travel path being greater than a preset lateral distance; or a distance between the local obstacle avoidance point and the robot being less than or equal to the braking distance of the robot.

For example, the angle difference between the travel angle of the robot and the target angle refers to the angle difference between the current body attitude of the robot and the target body attitude of the robot. When the angle difference between the travel angle of the robot and the target angle is greater than the preset angle difference (e.g., 3 degrees), it means that the travel direction of the robot deviates significantly from the direction corresponding to the travel path. At this time, the distance between the obstacle point in the global obstacle avoidance region and the robot is relatively large and will not affect the operation of the robot. The robot may perform local obstacle avoidance, i.e., determine the local obstacle avoidance point as the target obstacle avoidance point.

When the lateral distance between the current travel path of the robot and the preset travel path is greater than the preset lateral distance (e.g., 3 cm), it means that the current travel path of the robot is parallel to the preset travel path, i.e., the obstacle point in the global obstacle avoidance region will not affect the operation of the robot. Therefore, the robot performs local obstacle avoidance, i.e., determines the local obstacle avoidance point as the target obstacle avoidance point.

When the distance between the local obstacle avoidance point and the robot is less than or equal to the braking distance of the robot, it means that the robot may collide with the local obstacle avoidance point before adjusting its body attitude to the target body attitude. Therefore, the robot determines the local obstacle avoidance point as the target obstacle avoidance point to perform obstacle avoidance processing in a timely manner and avoid colliding with the local obstacle avoidance point.

In some embodiments, in a case where the candidate obstacle avoidance point includes the local obstacle avoidance point and the candidate obstacle avoidance point includes the global obstacle avoidance point, if the current location information of the robot and/or the local obstacle avoidance point does not satisfy the preset condition, a first positional relationship of the local obstacle avoidance point with respect to the global obstacle avoidance region is determined, and the target obstacle avoidance point is determined based on the first positional relationship and the current location information of the robot.

For example, the first positional relationship of the local obstacle avoidance point with respect to the global obstacle avoidance region indicates whether the local obstacle avoidance point is within the global obstacle avoidance region.

In some embodiments, determining the target obstacle avoidance point based on the first positional relationship includes: in a case where the first positional relationship indicates that the local obstacle avoidance point is located outside the global obstacle avoidance region, determining a projection point of the global obstacle avoidance point projected along the first direction into the local obstacle avoidance region as the target obstacle avoidance point.

For example, as shown in FIG. 10, it is assumed that there is a global obstacle avoidance point obstacle_A in the global obstacle avoidance region (the area framed by the dashed box in FIG. 10) and a local obstacle avoidance point obstacle_B in the local obstacle avoidance region (the area framed by the solid box in FIG. 10), and the local obstacle avoidance point obstacle_B is not within the global obstacle avoidance region. At this time, since the current location information of the robot and/or the local obstacle avoidance point does not satisfy the preset condition, i.e., the distance between the local obstacle avoidance point obstacle_B and the robot is greater than the braking distance of the robot, the projection point obstacle_A' obtained by projecting the global obstacle avoidance point obstacle_A along the X-axis direction of the global coordinate system onto the left boundary of the local obstacle avoidance region of the robot is determined as the target obstacle avoidance point.

In some embodiments, determining the target obstacle avoidance point based on the first positional relationship includes: in a case where the first positional relationship indicates that the local obstacle avoidance point is located inside the global obstacle avoidance region, determining a projection point of the global obstacle avoidance point projected along the first direction into the local obstacle avoidance region; and determining the target obstacle avoidance point based on the projection point, the local obstacle avoidance point, and the current location information of the robot.

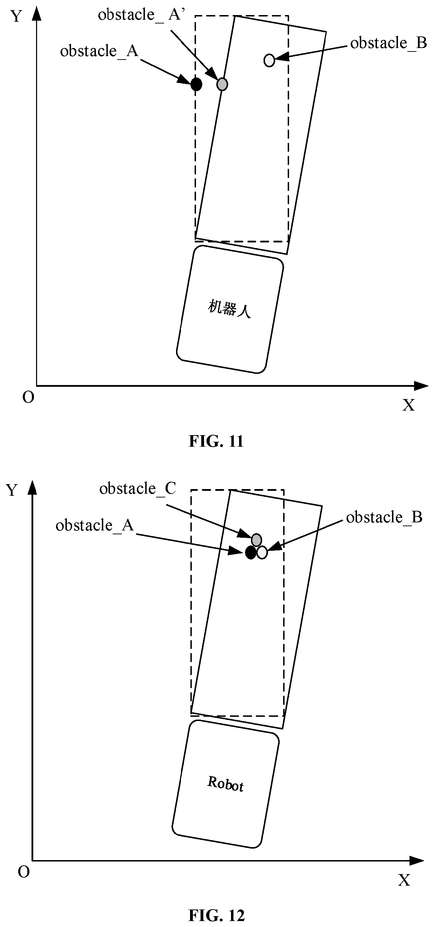

For example, as shown in FIG. 11, it is assumed that a global obstacle avoidance point obstacle_A exists in the global obstacle avoidance region (an area framed by a dashed box in FIG. 11), a local obstacle avoidance point obstacle_B exists in the local obstacle avoidance region (an area framed by a solid box in FIG. 11), and the local obstacle avoidance point obstacle_B is located inside the global obstacle avoidance region. The global obstacle avoidance point obstacle_A is projected along the X-axis direction of the global coordinate system onto a left boundary in the local obstacle avoidance region of the robot to obtain a projection point obstacle_A'. Then, based on the current location information of the robot, the projection point obstacle_A' is compared with the local obstacle avoidance point obstacle_B, and the target obstacle avoidance point is determined from the projection point obstacle_A' and the local obstacle avoidance point obstacle_B.

In some embodiments, determining the target obstacle avoidance point based on the projection point, the local obstacle avoidance point, and the current location information of the robot includes: determining a first distance between the projection point and the robot, and determining a second distance between the local obstacle avoidance point and the robot. In a case where the first distance is smaller than the second distance, the projection point is determined as the target obstacle avoidance point. In a case where the first distance is greater than the second distance, the local obstacle avoidance point is determined as the target obstacle avoidance point.

For example, the first distance between the projection point and the robot may be determined based on a coordinate of the projection point in the global coordinate system and the coordinate of the robot in the global coordinate system. The second distance between the local obstacle avoidance point and the robot may be determined based on a coordinate of the local obstacle avoidance point in the global coordinate system and the coordinate of the robot in the global coordinate system. Alternatively, the first distance between the projection point and the robot may be determined based on a coordinate of the projection point in the local coordinate system and a coordinate of the robot in the local coordinate system. The second distance between the local obstacle avoidance point and the robot may be determined based on a coordinate of the local obstacle avoidance point in the local coordinate system and the coordinate of the robot in the local coordinate system.

In some embodiments, in a case where the first distance is smaller than the second distance, it means that the distance between the projection point and the robot is smaller than the distance between the local obstacle avoidance point and the robot, i.e., the projection point is closer to the robot. In this case, the projection point is determined as the target obstacle avoidance point, so that the robot may perform obstacle avoidance processing in a timely manner. In a case where the first distance is greater than the second distance, it means that the distance between the local obstacle avoidance point and the robot is smaller than the distance between the projection point and the robot, i.e., the local obstacle avoidance point is closer to the robot. In this case, the local obstacle avoidance point is determined as the target obstacle avoidance point, so that the robot may perform obstacle avoidance processing in a timely manner.

For example, as shown in FIG. 11, in a case where the distance between the projection point obstacle_A' and the robot is smaller than the distance between the local obstacle avoidance point obstacle_B and the robot, i.e., the projection point obstacle_A' is closer to the robot, the projection point obstacle_A' is determined as the target obstacle avoidance point.

In some embodiments, in a case where the candidate obstacle avoidance point includes the local obstacle avoidance point and the candidate obstacle avoidance point includes the global obstacle avoidance point, in a case where the current location information of the robot and/or the local obstacle avoidance point does not satisfy the preset condition, a second positional relationship of the global obstacle avoidance point with respect to the local obstacle avoidance region is determined, and the target obstacle avoidance point is determined based on the second positional relationship.

For example, the second positional relationship of the global obstacle avoidance point with respect to the local obstacle avoidance region indicates whether the global obstacle avoidance point is located inside the local obstacle avoidance region.

In some embodiments, determining the target obstacle avoidance point based on the second positional relationship includes: in a case where the second positional relationship indicates that the global obstacle avoidance point is located inside the local obstacle avoidance region, determining a distance between the global obstacle avoidance point and the robot and a distance between the local obstacle avoidance point and the robot; and determining an obstacle point closest to the robot among the global obstacle avoidance point and the local obstacle avoidance point as the target obstacle avoidance point.

For example, as shown in FIG. 12, it is assumed that a global obstacle avoidance point obstacle_A exists in the global obstacle avoidance region (an area framed by a dashed box in FIG. 12), the global obstacle avoidance point obstacle_A is located inside the local obstacle avoidance region (an area framed by a solid box in FIG. 12), a local obstacle avoidance point obstacle_B and a local obstacle avoidance point obstacle_C exist in the local obstacle avoidance region, and the local obstacle avoidance point obstacle_B and the local obstacle avoidance point obstacle_C are both located inside the global obstacle avoidance region. Based on the current location information of the robot, distances between the global obstacle avoidance point obstacle_A, the local obstacle avoidance point obstacle_B, and the local obstacle avoidance point obstacle_C and the robot are respectively determined. In a case where the local obstacle avoidance point obstacle_B is closest to the robot, the local obstacle avoidance point obstacle_B is determined as the target obstacle avoidance point.

In some embodiments, in a case where the candidate obstacle avoidance point includes the local obstacle avoidance point and the candidate obstacle avoidance point does not include the global obstacle avoidance point, the target obstacle avoidance point is determined based on the local obstacle avoidance point and the current location of the robot.

For example, the candidate obstacle avoidance point includes the local obstacle avoidance point and does not include the global obstacle avoidance point, which means that no global obstacle avoidance point exists in the global obstacle avoidance region, but a local obstacle avoidance point exists in the local obstacle avoidance region. To ensure that the robot may avoid an obstacle in a timely manner, a distance between the local obstacle avoidance point and the robot is determined based on the local obstacle avoidance point and the current location of the robot, and whether the local obstacle avoidance point is the target obstacle avoidance point is determined based on the distance between the local obstacle avoidance point and the robot.

In some embodiments, in a case where the distance between the local obstacle avoidance point and the robot is less than or equal to the braking distance of the robot, the local obstacle avoidance point is determined as the target obstacle avoidance point. In a case where the distance between the local obstacle avoidance point and the robot is greater than the braking distance of the robot, a preset obstacle avoidance point is determined as the target obstacle avoidance point.

The distance between the preset obstacle avoidance point and the robot is always greater than the braking distance of the robot.

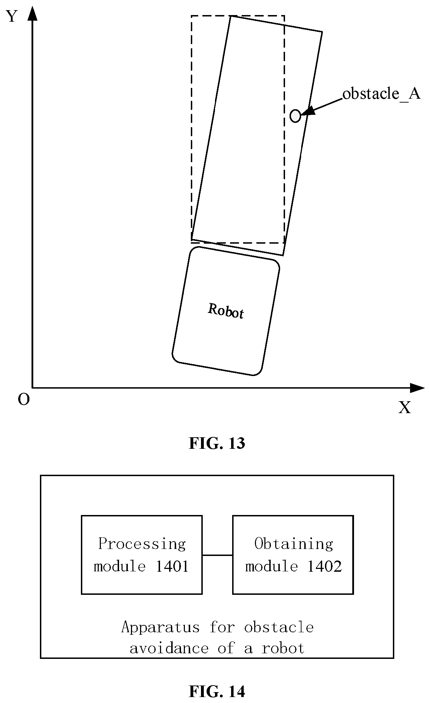

For example, as shown in FIG. 13, it is assumed that no global obstacle avoidance point exists in the global obstacle avoidance region (an area framed by a dashed box in FIG. 13), and a local obstacle avoidance point obstacle_A exists in the local obstacle avoidance region (an area framed by a solid box in FIG. 13). In this case, in a case where the distance between the local obstacle avoidance point obstacle_A and the robot is less than or equal to the braking distance, the local obstacle avoidance point obstacle_A is determined as the target obstacle avoidance point, so that the robot may avoid the obstacle in a timely manner, preventing the robot from colliding with the local obstacle avoidance point obstacle_A during operation. In a case where the distance between the local obstacle avoidance point obstacle_A and the robot is greater than the braking distance, it means that the robot does not need to perform obstacle avoidance processing at this time, and the preset obstacle avoidance point is determined as the target obstacle avoidance point, to ensure the operating efficiency of the robot.

In some embodiments, in a case where the candidate obstacle avoidance point does not include the local obstacle avoidance point and the global obstacle avoidance point, the preset obstacle avoidance point is determined as the target obstacle avoidance point.

For example, the candidate obstacle avoidance point does not include the local obstacle avoidance point or the global obstacle avoidance point, which means that no obstacle point exists in either the global obstacle avoidance region or the local obstacle avoidance region. At this time, the robot does not need to perform obstacle avoidance processing, and the preset obstacle avoidance point is determined as the target obstacle avoidance point, to ensure the operating efficiency of the robot.

S205: It is determined whether to perform obstacle avoidance processing based on the target obstacle avoidance point and the current location information of the robot.

For example, based on the target obstacle avoidance point and the current location information of the robot, a distance between the target obstacle avoidance point and the robot is determined. Then, based on the distance between the target obstacle avoidance point and the robot, whether to perform obstacle avoidance processing is determined. The distance between the target obstacle avoidance point and the robot may be determined based on a coordinate of the robot in the global coordinate system and a coordinate of the target obstacle avoidance point in the global coordinate system, or based on a coordinate of the robot in the local coordinate system and a coordinate of the target obstacle avoidance point in the local coordinate system.

In some embodiments, S205 includes: in a case where a distance between the target obstacle avoidance point and the robot is less than or equal to a braking distance of the robot, performing obstacle avoidance processing; and in a case where the distance between the target obstacle avoidance point and the robot is greater than the braking distance of the robot, not performing obstacle avoidance processing.

For example, in a case where the distance between the target obstacle avoidance point and the robot is less than or equal to the braking distance of the robot, it means that the robot will collide with the target obstacle avoidance point in a case where it does not decelerate or brake, and in this case, obstacle avoidance processing is performed.

In some embodiments, the robot performing obstacle avoidance processing refers to the robot decelerating or stopping. The robot may determine a deceleration during deceleration based on the distance between the target obstacle avoidance point and the robot.

For example, the shorter the distance between the target obstacle avoidance point and the robot, the greater the deceleration of the robot during deceleration.

In some embodiments, after performing obstacle avoidance processing, the robot may generate an obstacle avoidance instruction. The obstacle avoidance instruction is used to instruct a worker to remove the target obstacle avoidance point. When the robot detects that the target obstacle avoidance point is removed, the robot continues to travel along the travel path.

Based on the same disclosed concept, an embodiment of the present disclosure further provides an apparatus for obstacle avoidance of a robot for implementing the above method for obstacle avoidance. The implementation solution provided by the apparatus to solve the problem is similar to the implementation solution described in the above method. Therefore, specific limitations in one or more embodiments of the apparatus for obstacle avoidance provided below may refer to the limitations in the above method for obstacle avoidance, and are not repeated herein. Specifically, FIG. 14 is a schematic block diagram of an apparatus for obstacle avoidance of a robot according to an embodiment of the present disclosure. As shown in FIG. 14, the apparatus includes:
a processing module 1401 configured to determine a global obstacle avoidance region and a local obstacle avoidance region based on current location information of a robot; in which the global obstacle avoidance region is an obstacle avoidance region in front of the robot in a case where a body attitude of the robot is not deviated, and the local obstacle avoidance region is an obstacle avoidance region in front of the robot in a case where the body attitude of the robot is deviated; and
an obtaining module 1402 configured to obtain a global obstacle point detection result within the global obstacle avoidance region and a local obstacle point detection result within the local obstacle avoidance region,
in which the processing module 1401 is further configured to determine a candidate obstacle avoidance point according to the global obstacle point detection result and the local obstacle point detection result, the candidate obstacle avoidance point including a global obstacle avoidance point and/or a local obstacle avoidance point; determine a target obstacle avoidance point based on whether the candidate obstacle avoidance point includes the local obstacle avoidance point and/or the global obstacle avoidance point; and determine whether to perform obstacle avoidance processing based on the target obstacle avoidance point and the current location information of the robot, in which the global obstacle avoidance point is an obstacle point on a travel path located within the global obstacle avoidance region, and the local obstacle avoidance point is an obstacle point on the travel path located within the local obstacle avoidance region.

In an optional embodiment, the processing module 1401 is further configured to determine the global obstacle avoidance region based on current location information of the robot in a global coordinate system and a preset obstacle avoidance region size; and determine the local obstacle avoidance region based on current location information of the robot in a local coordinate system and the preset obstacle avoidance region size.

In an optional embodiment, the obtaining module 1402 is further configured to obtain location information of at least one obstacle point. The processing module 1401 is further configured to determine the global obstacle point detection result based on the location information of the at least one obstacle point and the global obstacle avoidance region, in which the global obstacle point detection result indicates whether the at least one obstacle point exists within the global obstacle avoidance region; and determine the local obstacle point detection result based on the location information of the at least one obstacle point and the local obstacle avoidance region, in which the local obstacle point detection result indicates whether the at least one obstacle point exists within the local obstacle avoidance region.

In an optional embodiment, the processing module 1401 is further configured to: in a case where the global obstacle point detection result indicates that at least one first obstacle point exists in the global obstacle avoidance region, determine the global obstacle avoidance point among the at least one first obstacle point based on the current location information of the robot; and/or in a case where the local obstacle point detection result indicates that at least one second obstacle point exists in the local obstacle avoidance region, determine the local obstacle avoidance point among the at least one second obstacle point based on the current location information of the robot.

In an optional embodiment, the processing module 1401 is further configured to determine, based on the current location information of the robot, a distance between each first obstacle point and the robot; and determine the first obstacle point closest to the robot as the global obstacle avoidance point.

In an optional embodiment, the processing module 1401 is further configured to determine, based on the current location information of the robot, a distance between each second obstacle point and the robot; and determine the second obstacle point closest to the robot as the local obstacle avoidance point.

In an optional embodiment, the processing module 1401 is further configured to: in a case where the candidate obstacle avoidance point does not include the local obstacle avoidance point and the candidate obstacle avoidance point includes the global obstacle avoidance point, determine a projection point of the global obstacle avoidance point projected along a first direction into the local obstacle avoidance region as the target obstacle avoidance point.

In an optional embodiment, the processing module 1401 is further configured to: in a case where the candidate obstacle avoidance point includes the local obstacle avoidance point and the candidate obstacle avoidance point includes the global obstacle avoidance point, in a case where the current location information of the robot and/or the local obstacle avoidance point satisfies a preset condition, determine the local obstacle avoidance point as the target obstacle avoidance point; and in a case where the current location information of the robot and/or the local obstacle avoidance point does not satisfy the preset condition, determine a first positional relationship of the local obstacle avoidance point with respect to the global obstacle avoidance region, and determine the target obstacle avoidance point based on the first positional relationship and the current location information of the robot; or in a case where the current location information of the robot and/or the local obstacle avoidance point does not satisfy the preset condition, determine a second positional relationship of the global obstacle avoidance point with respect to the local obstacle avoidance region, and determine the target obstacle avoidance point based on the second positional relationship.

In an optional embodiment, the current location information of the robot and/or the local obstacle avoidance point satisfying the preset condition includes at least one of: an angle difference between a travel angle of the robot and a target angle being greater than a preset angle difference; a lateral distance between a current travel path of the robot and a preset travel path being greater than a preset lateral distance; or a distance between the local obstacle avoidance point and the robot being less than or equal to a braking distance of the robot.

In an optional embodiment, the processing module 1401 is further configured to: in a case where the first positional relationship indicates that the local obstacle avoidance point is located outside the global obstacle avoidance region, determine a projection point of the global obstacle avoidance point projected along the first direction into the local obstacle avoidance region as the target obstacle avoidance point.

In an optional embodiment, the processing module 1401 is further configured to: in a case where the first positional relationship indicates that the local obstacle avoidance point is located inside the global obstacle avoidance region, determine a projection point of the global obstacle avoidance point projected along the first direction into the local obstacle avoidance region; and determine the target obstacle avoidance point based on the projection point, the local obstacle avoidance point, and the current location information of the robot.

In an optional embodiment, the processing module 1401 is further configured to: determine a first distance between the projection point and the robot; determine a second distance between the local obstacle avoidance point and the robot; in a case where the first distance is smaller than the second distance, determine the projection point as the target obstacle avoidance point; and in a case where the first distance is greater than the second distance, determine the local obstacle avoidance point as the target obstacle avoidance point.

In an optional embodiment, the processing module 1401 is further configured to: in a case where the second positional relationship indicates that the global obstacle avoidance point is located inside the local obstacle avoidance region, determine a distance between the global obstacle avoidance point and the robot and a distance between the local obstacle avoidance point and the robot; and determine an obstacle point closest to the robot among the global obstacle avoidance point and the local obstacle avoidance point as the target obstacle avoidance point.

In an optional embodiment, the processing module 1401 is further configured to: in a case where a distance between the target obstacle avoidance point and the robot is less than or equal to a braking distance of the robot, perform the obstacle avoidance processing; and in a case where the distance between the target obstacle avoidance point and the robot is greater than the braking distance of the robot, not perform the obstacle avoidance processing.

In an optional embodiment, the processing module 1401 is further configured to: in a case where the candidate obstacle avoidance point includes the local obstacle avoidance point and the candidate obstacle avoidance point does not include the global obstacle avoidance point, determine the target obstacle avoidance point based on the local obstacle avoidance point and the current location of the robot.

In an optional embodiment, the processing module 1401 is further configured to: in a case where a distance between the local obstacle avoidance point and the robot is less than or equal to the braking distance of the robot, determine the local obstacle avoidance point as the target obstacle avoidance point; and in a case where the distance between the local obstacle avoidance point and the robot is greater than the braking distance of the robot, determine a preset obstacle avoidance point as the target obstacle avoidance point, in which a distance between the preset obstacle avoidance point and the robot is always greater than the braking distance of the robot.

In an optional embodiment, the processing module 1401 is further configured to: in a case where the candidate obstacle avoidance point does not include the local obstacle avoidance point and the global obstacle avoidance point, determine the preset obstacle avoidance point as the target obstacle avoidance point.

In an optional embodiment, the processing module 1401 is further configured to: determine location information of the at least one obstacle point in a global coordinate system based on the location information of the at least one obstacle point in the local coordinate system, the current location information of the robot in the local coordinate system, and a position attitude angle of the robot; and determine the global obstacle point detection result based on the location information of the at least one obstacle point in the global coordinate system and the global obstacle avoidance region.

In an optional embodiment, the processing module 1401 is further configured to determine the local obstacle point detection result based on the location information of the at least one obstacle point in the local coordinate system and the local obstacle avoidance region.

Regarding the specific limitations and achievable beneficial effects of the apparatus for obstacle avoidance of a robot, reference may be made to the limitations of the method for obstacle avoidance of a robot above, and details are not repeated herein.

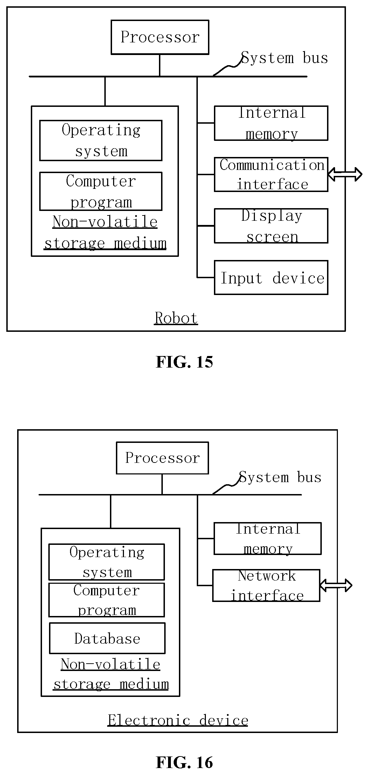

As shown in FIG. 15, a schematic block diagram of an internal structure of a robot according to an embodiment is provided. The robot includes a processor, a memory, a communication interface, a display screen, and an input device connected via a system bus. The processor of the robot is used to provide computing and control capabilities. The memory of the robot includes a non-volatile storage medium and an internal memory. The non-volatile storage medium stores an operating system and a computer program. The internal memory provides an environment for the operation of the operating system and the computer program in the non-volatile storage medium. The communication interface of the robot is used to communicate with an external terminal in a wired or wireless manner, and the wireless manner may be implemented via WI-FI, a carrier network, NFC (near field communication), or other technologies. The computer program, when executed by the processor, implements a method for obstacle avoidance of a robot. The display screen of the robot may be a liquid crystal display screen or an electronic ink display screen, and the input device of the robot may be a touch layer covered on the display screen, or may be a key, a trackball, or a touchpad provided on the robot housing, or may be an external keyboard, touchpad, mouse, or the like.

As shown in FIG. 16, a schematic block diagram of an internal structure of an electronic device according to an embodiment is provided. The electronic device may be a server. The electronic device includes a processor, a memory, and a network interface connected via a system bus. The processor of the electronic device is used to provide computing and control capabilities. The memory of the electronic device includes a non-volatile storage medium and an internal memory. The non-volatile storage medium stores an operating system, a computer program, and a database. The internal memory provides an environment for the operation of the operating system and the computer program in the non-volatile storage medium. The database of the electronic device is used to store height parameters and three-dimensional map data. The network interface of the electronic device is used to communicate with an external terminal via a network connection. The computer program, when executed by the processor, implements a method for obstacle avoidance of a robot.

A person skilled in the art may understand that the structures shown in FIG. 15 and FIG. 16 are only block diagrams of partial structures related to the solution of the present disclosure, and do not constitute a limitation on the robot and the electronic device to which the solution of the present disclosure is applied. A specific robot and a specific electronic device may include more or fewer components than shown in the figures, or combine some components, or have a different arrangement of components.

In a specific implementation, an embodiment of the present disclosure provides an electronic device, including a processor and a memory, the memory storing a computer program, and the processor executes the computer program to implement the steps of the method in any of the above embodiments.

In a specific implementation, an embodiment of the present disclosure provides a computer-readable storage medium storing a computer program that, when executed by a processor, implements the steps of the method in any of the above embodiments.

In a specific implementation, an embodiment of the present disclosure provides a computer program product, including a computer program that, when executed by a processor, implements the steps of the method in any of the above embodiments.

It should be noted that the user information (including but not limited to user device information, user personal information, etc.) and data (including but not limited to data for analysis, stored data, displayed data, etc.) involved in the present disclosure are all information and data authorized by the user or fully authorized by all parties. A person of ordinary skill in the art may understand that all or part of the processes in the methods of the above embodiments may be implemented by a computer program instructing relevant hardware. The computer program may be stored in a non-volatile computer-readable storage medium. When the computer program is executed, the processes of the above method embodiments may be included. Any reference to a memory, a database, or another medium used in the embodiments provided in the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache memory. By way of illustration and not limitation, the ram may be in various forms, such as a static random access memory (SRAM) or a dynamic random access memory (DRAM). The database involved in the embodiments provided in the present disclosure may include at least one of a relational database and a non-relational database. The non-relational database may include a blockchain-based distributed database, but is not limited thereto. The processor involved in the embodiments provided in the present disclosure may be a general-purpose processor, a central processing unit, a graphics processing unit, a digital signal processor, a programmable logic device, a quantum computing-based data processing logic device, etc., but is not limited thereto.

The technical features of the above embodiments may be combined arbitrarily. To simplify the description, not all possible combinations of the technical features in the above embodiments are described. However, as long as there is no contradiction in the combination of these technical features, it should be considered as falling within the scope of the present description.

The above embodiments only describe several implementations of the present disclosure, and the description thereof is specific and detailed, but it should not be construed as limiting the scope of the present disclosure. It should be noted that a person of ordinary skill in the art may make several modifications and improvements without departing from the concept of the present disclosure, and these modifications and improvements fall within the protection scope of the present disclosure. Therefore, the protection scope of the present disclosure should be subject to the appended claims.

## Claims

1. A method for obstacle avoidance of a robot, comprising:
determining a global obstacle avoidance region and a local obstacle avoidance region based on current location information of the robot; wherein the global obstacle avoidance region is an obstacle avoidance region in front of the robot in a case where a body attitude of the robot is not deviated, the local obstacle avoidance region is an obstacle avoidance region in front of the robot in a case where the body attitude of the robot is deviated;
obtaining a global obstacle point detection result within the global obstacle avoidance region and a local obstacle point detection result within the local obstacle avoidance region;
determining a candidate obstacle avoidance point according to the global obstacle point detection result and the local obstacle point detection result, wherein the candidate obstacle avoidance point comprises a global obstacle avoidance point and/or a local obstacle avoidance point, the global obstacle avoidance point is an obstacle point on a travel path located within the global obstacle avoidance region, and the local obstacle avoidance point is an obstacle point on the travel path located within the local obstacle avoidance region;
determining a target obstacle avoidance point based on whether the candidate obstacle avoidance point comprises the local obstacle avoidance point and/or the global obstacle avoidance point; and
determining whether to perform obstacle avoidance processing based on the target obstacle avoidance point and the current location information of the robot.

2. The method according to claim 1, wherein determining the global obstacle avoidance region and the local obstacle avoidance region based on the current location information of the robot comprises:
determining the global obstacle avoidance region based on the current location information of the robot in a global coordinate system and a preset obstacle avoidance region size; and
determining the local obstacle avoidance region based on the current location information of the robot in a local coordinate system and the preset obstacle avoidance region size.

3. The method according to claim 1, wherein obtaining the global obstacle point detection result within the global obstacle avoidance region and the local obstacle point detection result within the local obstacle avoidance region comprises:
obtaining location information of at least one obstacle point;
determining the global obstacle point detection result based on the location information of the at least one obstacle point and the global obstacle avoidance region, wherein the global obstacle point detection result indicates whether the at least one obstacle point exists within the global obstacle avoidance region; and
determining the local obstacle point detection result based on the location information of the at least one obstacle point and the local obstacle avoidance region, wherein the local obstacle point detection result indicates whether the at least one obstacle point exists within the local obstacle avoidance region.

4. The method according to claim 3, wherein determining the candidate obstacle avoidance point according to the global obstacle point detection result and the local obstacle point detection result comprises:
in a case where the global obstacle point detection result indicates that at least one first obstacle point exists in the global obstacle avoidance region, determining the global obstacle avoidance point among the at least one first obstacle point based on the current location information of the robot; and/or
in a case where the local obstacle point detection result indicates that at least one second obstacle point exists in the local obstacle avoidance region, determining the local obstacle avoidance point among the at least one second obstacle point based on the current location information of the robot.

5. The method according to claim 4, wherein determining the global obstacle avoidance point among the at least one first obstacle point based on the current location information of the robot comprises:
determining, based on the current location information of the robot, a distance between each first obstacle point and the robot; and
determining the first obstacle point closest to the robot as the global obstacle avoidance point.

6. The method according to claim 4, wherein determining the local obstacle avoidance point among the at least one second obstacle point based on the current location information of the robot comprises:
determining, based on the current location information of the robot, a distance between each second obstacle point and the robot; and
determining a second obstacle point closest to the robot as the local obstacle avoidance point.

7. The method according to any one of claims 1-6, wherein determining the target obstacle avoidance point based on the candidate obstacle avoidance point comprises:
in a case where the candidate obstacle avoidance point does not comprise the local obstacle avoidance point and the candidate obstacle avoidance point comprises the global obstacle avoidance point, determining a projection point of the global obstacle avoidance point projected along a first direction into the local obstacle avoidance region as the target obstacle avoidance point.

8. The method according to any one of claims 1-6, wherein determining the target obstacle avoidance point based on the candidate obstacle avoidance point comprises:
in a case where the candidate obstacle avoidance point comprises the local obstacle avoidance point and the candidate obstacle avoidance point comprises the global obstacle avoidance point,
in a case where the current location information of the robot and/or the local obstacle avoidance point satisfies a preset condition, determining the local obstacle avoidance point as the target obstacle avoidance point; and
in a case where the current location information of the robot and/or the local obstacle avoidance point does not satisfy the preset condition, determining a first positional relationship of the local obstacle avoidance point with respect to the global obstacle avoidance region, and determining the target obstacle avoidance point based on the first positional relationship and the current location information of the robot; or in a case where the current location information of the robot and/or the local obstacle avoidance point does not satisfy the preset condition, determining a second positional relationship of the global obstacle avoidance point with respect to the local obstacle avoidance region, and determining the target obstacle avoidance point based on the second positional relationship.

9. The method according to claim 8, wherein the current location information of the robot and/or the local obstacle avoidance point satisfying the preset condition comprises at least one of:
an angle difference between a travel angle of the robot and a target angle being greater than a preset angle difference;
a lateral distance between a current travel path of the robot and a preset travel path being greater than a preset lateral distance; or
a distance between the local obstacle avoidance point and the robot being less than or equal to a braking distance of the robot.

10. The method according to claim 9, wherein determining the target obstacle avoidance point based on the first positional relationship comprises:
in a case where the first positional relationship indicates that the local obstacle avoidance point is located outside the global obstacle avoidance region, determining a projection point of the global obstacle avoidance point projected along the first direction into the local obstacle avoidance region as the target obstacle avoidance point.

11. The method according to claim 9, wherein determining the target obstacle avoidance point based on the first positional relationship comprises:
in a case where the first positional relationship indicates that the local obstacle avoidance point is located inside the global obstacle avoidance region, determining a projection point of the global obstacle avoidance point projected along the first direction into the local obstacle avoidance region; and
determining the target obstacle avoidance point based on the projection point, the local obstacle avoidance point, and the current location information of the robot.

12. The method according to claim 11, wherein determining the target obstacle avoidance point based on the projection point, the local obstacle avoidance point, and the current location information of the robot comprises:
determining a first distance between the projection point and the robot;
determining a second distance between the local obstacle avoidance point and the robot;
in a case where the first distance is smaller than the second distance, determining the projection point as the target obstacle avoidance point; and
in a case where the first distance is greater than the second distance, determining the local obstacle avoidance point as the target obstacle avoidance point.

13. The method according to claim 9, wherein determining the target obstacle avoidance point based on the second positional relationship comprises:
in a case where the second positional relationship indicates that the global obstacle avoidance point is located inside the local obstacle avoidance region, determining a distance between the global obstacle avoidance point and the robot and a distance between the local obstacle avoidance point and the robot; and
determining an obstacle point closest to the robot among the global obstacle avoidance point and the local obstacle avoidance point as the target obstacle avoidance point.

14. The method according to any one of claims 1-6, wherein determining whether to perform the obstacle avoidance processing based on the target obstacle avoidance point and the current location information of the robot comprises:
in a case where a distance between the target obstacle avoidance point and the robot is less than or equal to a braking distance of the robot, performing the obstacle avoidance processing; and
in a case where the distance between the target obstacle avoidance point and the robot is greater than the braking distance of the robot, not performing the obstacle avoidance processing.

15. The method according to claim 14, wherein determining the target obstacle avoidance point based on the candidate obstacle avoidance point comprises:
in a case where the candidate obstacle avoidance point comprises the local obstacle avoidance point and the candidate obstacle avoidance point does not comprise the global obstacle avoidance point, determining the target obstacle avoidance point based on the local obstacle avoidance point and the current location of the robot.

16. The method according to claim 15, wherein determining the target obstacle avoidance point based on the local obstacle avoidance point and the current location of the robot comprises:
in a case where a distance between the local obstacle avoidance point and the robot is less than or equal to the braking distance of the robot, determining the local obstacle avoidance point as the target obstacle avoidance point; and
in a case where the distance between the local obstacle avoidance point and the robot is greater than the braking distance of the robot, determining a preset obstacle avoidance point as the target obstacle avoidance point, wherein a distance between the preset obstacle avoidance point and the robot is always greater than the braking distance of the robot.

17. The method according to claim 16, wherein determining the target obstacle avoidance point based on the candidate obstacle avoidance point comprises:
in a case where the candidate obstacle avoidance point does not comprise the local obstacle avoidance point and the global obstacle avoidance point, determining the preset obstacle avoidance point as the target obstacle avoidance point.

18. The method according to claim 3, wherein determining the global obstacle point detection result based on the location information of the at least one obstacle point and the global obstacle avoidance region comprises:
determining location information of the at least one obstacle point in a global coordinate system based on the location information of the at least one obstacle point in a local coordinate system, the current location information of the robot in the local coordinate system, and a position attitude angle of the robot; and
determining the global obstacle point detection result based on the location information of the at least one obstacle point in the global coordinate system and the global obstacle avoidance region.

19. The method according to claim 3, wherein determining the local obstacle point detection result based on the location information of the obstacle point and the local obstacle avoidance region comprises:
determining the local obstacle point detection result based on the location information of the at least one obstacle point in the local coordinate system and the local obstacle avoidance region.

20. An apparatus for obstacle avoidance of a robot, comprising:
a processing module configured to determine a global obstacle avoidance region and a local obstacle avoidance region based on current location information of the robot, wherein the global obstacle avoidance region is an obstacle avoidance region in front of the robot in a case where a body attitude of the robot is not deviated, and the local obstacle avoidance region is an obstacle avoidance region in front of the robot in a case where the body attitude of the robot is deviated; and
an obtaining module configured to obtain a global obstacle point detection result within the global obstacle avoidance region and a local obstacle point detection result within the local obstacle avoidance region,
wherein the processing module is further configured to determine a candidate obstacle avoidance point according to the global obstacle point detection result and the local obstacle point detection result, the candidate obstacle avoidance point comprising a global obstacle avoidance point and/or a local obstacle avoidance point; determine a target obstacle avoidance point based on whether the candidate obstacle avoidance point comprises the local obstacle avoidance point and/or the global obstacle avoidance point; and determine whether to perform obstacle avoidance processing based on the target obstacle avoidance point and the current location information of the robot, wherein the global obstacle avoidance point is an obstacle point on a travel path located within the global obstacle avoidance region, and the local obstacle avoidance point is an obstacle point on the travel path located within the local obstacle avoidance region.

21. An electronic device, comprising a memory and a processor, the memory storing a computer program, wherein the processor executes the computer program to implement the method according to any one of claims 1-19.

22. A computer-readable storage medium, storing a computer program that, when executed by a processor, implements the method according to any one of claims 1-19.
